# FASCICULE DE BREVET EUROPEEN

(11) **EP 3 883 837 B1**
(45) Date de publication et mention de la délivrance du brevet: **07.06.2023**
(21) Numéro de dépôt: 19805693.9
(22) Date de dépôt: 22.11.2019
(51) Int. Cl.: B62B 9/22

(54) **DISPOSITIF PORTATIF DE BALANCEMENT DE POUSSETTE POUR APAISER L'ENFANT SANS LE CONDITIONNER**
TRAGBARE VORRICHTUNG ZUM SCHAUKELN EINES KINDERWAGENS, UM DAS KIND OHNE BEEINTRÄCHTIGUNG ZU BERUHIGEN
PORTABLE DEVICE FOR ROCKING A STROLLER IN ORDER TO PACIFY THE CHILD WITHOUT CONDITIONING IT

(30) Priorité: 22.11.2018 FR 1871704
(43) Date de publication de la demande: 29.09.2021
(73) Titulaire: Baby M, 06400 Cannes (FR)
(72) Inventeur: CARRERAS, Franck, 06400 Cannes (FR); CARRERAS, Julie, 06400 Cannes (FR)
(74) Mandataire: Bonneau, Florence
(86) Numéro de dépôt international: PCT/EP2019/082202
(87) Numéro de publication internationale: WO 2020/104642

(56) Documents cités:
- DE-A1- 19 727 173
- KR-A- 20160 017 590
- SE-A1- 1 400 114

## Description

### Domaine technique

La présente invention concerne les dispositifs destinés à balancer et bercer les véhicules des très jeunes enfants pour les accompagner dans leur endormissement et concerne en particulier un dispositif portatif de balancement de poussette pour apaiser l'enfant sans le conditionner.

### Etat de la technique

Il existe un certain nombre de dispositifs pour balancer et bercer automatiquement les poussettes d'enfant. Ces dispositifs consistent à induire un mouvement de va-et-vient à la poussette de façon à accompagner l'enfant dans son endormissement. Ces dispositifs remplacent les parents dans l'étape d'apaisement et d'endormissement de leur enfant. En effet, par commodité pour les parents, la poussette est souvent utilisée comme un second lit pour l'enfant qui a besoin de beaucoup dormir dans les premiers mois de sa vie. D'autre part, lorsque l'enfant est âgé de quelques mois, il associe la poussette au mouvement et il arrive parfois que l'enfant manifeste de l'impatience lorsque la poussette est immobilisée. Le mouvement donné par le parent peut permettre à l'enfant de retrouver l'impression de mouvement. Lorsque les parents et l'enfant sont hors de la maison, l'enfant peut se retrouver dans un environnement peu favorable à l'apaisement ou à l'endormissement et le simple fait de mettre en mouvement la poussette peut avoir un effet apaisant. Dans certains cas, comme par exemple dans un restaurant, chez des amis ou même dans un lieu public, le mouvement de va-et-vient de la poussette donné par le parent pour bercer l'enfant et l'aider à trouver le sommeil peut être fastidieux. En particulier dans ces cas là, l'utilisation d'un dispositif pour bercer automatiquement la poussette peut s'avérer très utile. Néanmoins, ces dispositifs présentent des inconvénients.

Un premier type de dispositif de bercement décrit par exemple dans les documents FR2651980 et WO2014/013482 est composé d'un galet ou d'une roue de friction destiné à entraîner l'une des roues de la poussette. L'inconvénient de ce type de dispositif est qu'il doit être fixé à la poussette pour être fonctionnel et donc adapté pour chaque type de poussette.

Un second type de dispositif de balancement se présente sous forme d'une plateforme sur laquelle se pose une ou plusieurs roues de la poussette. Les documents EP2418140 et EP0415736 décrivent de tels dispositifs. Mais du fait de leur taille imposante, ils ne sont pas destinés à un usage nomade en particulier en dehors de la maison.

Un autre inconvénient de ces systèmes repose sur le risque de conditionner l'endormissement de l'enfant à un mouvement particulier de va-et-vient en continu produit par ces dispositifs. En effet, ces dispositifs fonctionnent un certain temps avant de s'arrêter selon des cycles prédéfinis ou définis par l'utilisateur et selon une fréquence donnée mais ne prennent pas en compte d'autres paramètres propres à l'enfant et liés à l'environnement et qui peuvent éviter le conditionnement.

En outre, la mise en route et l'arrêt de ces dispositifs n'est pas pratique lorsqu'il s'agit d'actionner un interrupteur situé sur le dispositif sous la poussette. Ce manque de facilité d'utilisation peut induire un usage un peu subit par les parents qui ont tendance alors à laisser le dispositif fonctionner plus longtemps que nécessaire. Le document KR20160017590 montre également un dispositif de balancement de poussette.

### Exposé de l'invention

C'est pourquoi, le but de l'invention est de réaliser un dispositif de balancement pour poussette fiable et peu encombrant qui accompagne l'enfant dans l'étape qui précède l'endormissement, qui pallie les inconvénients précités et dont la mise en route et l'arrêt sont facilités.

L'objet de l'invention est donc un dispositif de balancement de poussette comprenant au moins un élément principal muni d'un moteur et de moyens roulants sur sa face inférieure, le moteur et les moyens roulants étant adaptés pour entraîner l'élément principal dans un mouvement de va-et-vient, la face supérieure de l'élément principal étant adaptée pour recevoir une roue de la poussette. Selon les caractéristiques principales de l'invention, les moyens roulants sont adaptés pour rouler sur le sol et le dispositif comprend un moyen pour démarrer automatiquement le mouvement de va-et-vient par un geste volontaire de l'utilisateur consistant à pousser la poussette de façon à entraîner l'élément principal au moins une fois dans une première direction et au moins une fois dans la direction inverse à la première.

### Brève description des figures

Les buts, objets et caractéristiques de l'invention apparaîtront plus clairement à la lecture de la description qui suit faite en référence aux dessins dans lesquels :
[Fig. 1] représente un schéma d'ensemble du dispositif selon l'invention et une poussette,
[Fig. 2] représente le dispositif selon l'invention en trois dimensions,
[Fig. 3] représente l'intérieur du dispositif selon l'invention,
[Fig. 4] représente une vue de dessous de l'intérieur du dispositif selon l'invention,
[Fig. 5] représente une vue éclatée du dispositif selon l'invention,
[Fig. 6] est une vue schématisée et partielle du dispositif selon l'invention selon une coupe longitudinale,
[Fig. 7] représente une vue schématisée d'une coupe de l'élément 10 portant une roue, en déplacement de gauche à droite,
[Fig. 8] représente une vue schématisée d'une coupe de l'élément 10 portant une roue, en déplacement de droite à gauche,
[Fig. 9] représente un bloc diagramme du circuit électrique du dispositif selon l'invention,
[Fig. 10] représente le schéma global d'utilisation du dispositif selon l'invention en tant qu'objet connecté.

### Description détaillée de l'invention

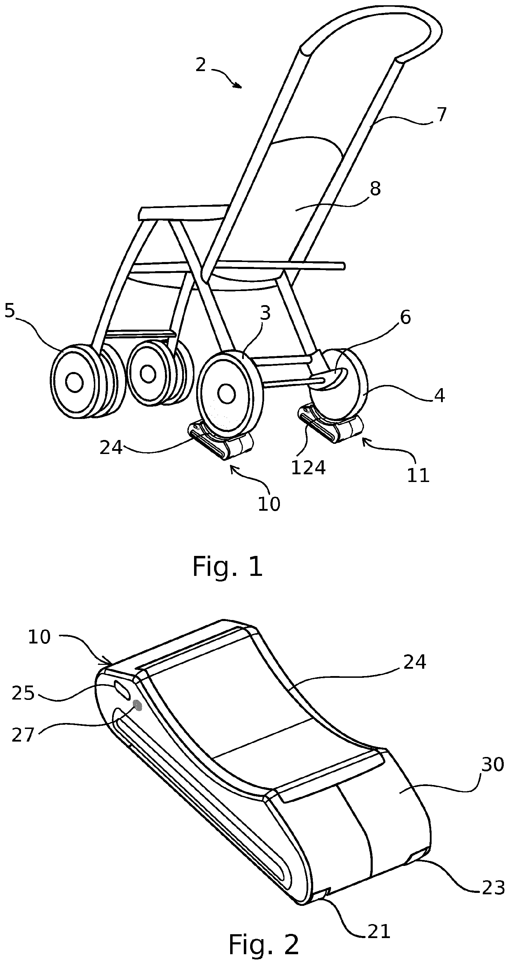

Selon la figure 1, le dispositif de balancement selon l'invention comporte deux éléments mobiles, dont au moins un élément principal 10 équipé d'un moteur et un élément secondaire 11. Dans le mode de réalisation décrit, l'élément secondaire n'est pas motorisé mais a une forme extérieure identique à celle de l'élément principal 10. Les deux éléments sont destinés à supporter chacun une roue 3 ou 4 d'une poussette 2. La poussette comprend principalement des roues 3, 4 et 5, un châssis 7 et un hamac 8 sur lequel est placé l'enfant. Le hamac peut être un landau, un siège auto ou autre. Chaque élément 10 et 11 a des moyens roulants destinés à être posés sur le sol et a une face supérieure adaptée pour supporter tout type de roue. Les roues 3 et 4 placées sur les éléments 10 et 11 sont celles sur lesquelles un frein 6 peut être actionné pour empêcher leur rotation et pour des raisons de sécurité.

En référence à la figure 2, l'élément principal 10 est caréné par une coque de protection 30. L'élément 10 comporte sur sa face inférieure au moins deux moyens roulants 21 et 23 destinés à être posés sur le sol et sur sa face supérieure le support de roue 24 de forme adaptée pour recevoir et supporter une roue de la poussette 2. Les moyens roulants de l'élément secondaire sont identiques à ceux de l'élément principal.

Selon un mode de réalisation préféré, le support de roue 24 comporte des moyens pour bloquer la roue sans la contraindre. Ces moyens empêchent la roue de sortir du support de roue involontairement et sont définis par une forme en « cuvette » avec deux parois latérales inclinés vers le centre, ou plus précisément courbes avec une forme partiellement circulaire. Ces moyens peuvent également être complétés par un revêtement antidérapant. L'élément secondaire 11 comporte également des moyens pour empêcher la roue de sortir de son emplacement, identiques à ceux de l'élément 10, tel qu'un support de roue 124 de même forme que le support de roue 24 et muni d'un revêtement antidérapant.

L'élément principal 10 comporte une interface de type USB 25 ou autre pour le branchement à un moyen d'échanges de données filaire ou à un moyen de rechargement de sa batterie située sous la coque. L'élément principal 11 comporte également un moyen lumineux 27 tel qu'une diode électroluminescente (LED) pour avertir de l'état de fonctionnement du dispositif.

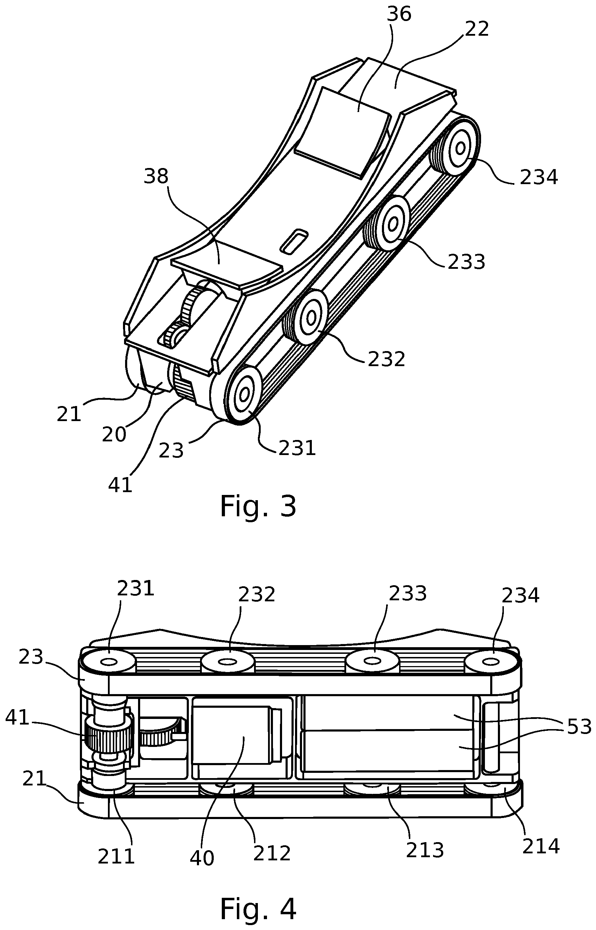

L'élément principal 10 est représenté sans sa coque sur les figures 3 et 4. Il est composé d'un châssis 20 sur lequel est fixé un circuit imprimé 22 contenant le circuit électronique destinée à gérer la mise en route, le démarrage et l'arrêt du moteur et le cycle de fonctionnement du dispositif selon l'invention. L'élément principal 10 comporte un moyen pour détecter la présence et les mouvements d'un poids, comme par exemple la poussette située sur le support de roue. Ce moyen peut être un capteur de pression. Le capteur de pression utilisé est un capteur de déformation ou un accéléromètre. Selon un mode de réalisation préféré, le dispositif selon l'invention comprend deux capteurs de pression. Le premier capteur de pression comprend une première pièce de liaison 36 et le second capteur de pression comprend une seconde pièce de liaison 38. Les pièces de liaison sont identiques et placées en opposition sur le circuit imprimé 22. Chaque pièce de liaison comprend une face inclinée pour correspondre avec les parois latérales inclinées du support de roue de l'élément principal.

Selon le mode de réalisation préféré de l'invention, les moyens roulants de l'élément principal 10 sont deux chenilles 21 et 23 comme on peut le voir sur les figures 3 et 4, situées de chaque côté du dispositif. Chaque chenille est du type courroie fermée tendue par deux poulies situées aux extrémités de l'élément et guidées par un ou deux galets intermédiaires situés entre les poulies. Donc la chenille 21 est tendu par les poulies 211 et 214 et guidée par les galets 212 et 213. De même, la chenille 23 est tendu par les poulies 231 et 234 et guidée par les galets 232 et 233. Pour chaque chenille, au moins une des poulies est entraînée par un moteur 40. Selon le mode de réalisation préféré, les poulies d'entrainements sont les poulies 211 et 231, fixées sur un axe commun entrainé par le moteur grâce à une transmission par un ensemble d'engrenages 41 comprenant un certain nombre de pignons et de vis sans fin.

Seul l'élément principal 10 comporte un moteur 40 pour mettre en mouvement les poulies d'entrainement 211 et 231, qui elles-mêmes entraînent les moyens roulants 21 et 23 selon une trajectoire rectiligne et en va-et-vient. La distance parcourue par l'élément principal dans chacune des deux directions est fixe et limitée. L'élément secondaire 11 comprend également des moyens roulants tels que deux chenilles de type courroies fermées tendues par deux poulies d'extrémité et guidées par un ou deux galets intermédiaires.

Les chenilles sont de préférence en caoutchouc ou dans un matériau dont les propriétés mécaniques sont similaires. La surface intérieure des chenilles, c'est à dire celle en contact avec les poulies et les galets a une forme adaptée pour coopérer avec la forme des poulies et des galets. Par exemple, les chenilles sont striées sur leur face intérieure comme on peut le voir sur les figures 3 et 4 dans leur sens longitudinal. Les poulies et les galets sont de préférences munis de stries de forme complémentaire à celle des stries des chenilles. Ainsi, les chenilles sont adaptées pour s'engrener sur les poulies et les galets. Les stries longitudinales améliorent l'adhérence entre les moyens roulants et les poulies d'entrainement en évitant le patinage et l'échenillage.

D'autres moyens d'entrainement pour la chenille peuvent être utilisés sans sortir du cadre de l'invention. Par exemple, les chenilles peuvent être crantées. Dans ce cas, les poulies et les galets sont munis de dents de forme complémentaire à la forme des crans de la chenille de façon à ce que les chenilles soient adaptées pour s'engrener sur les poulies et les galets.

Le moteur 40 est alimenté par au moins une batterie et de préférence deux batteries 53 de type lithium.

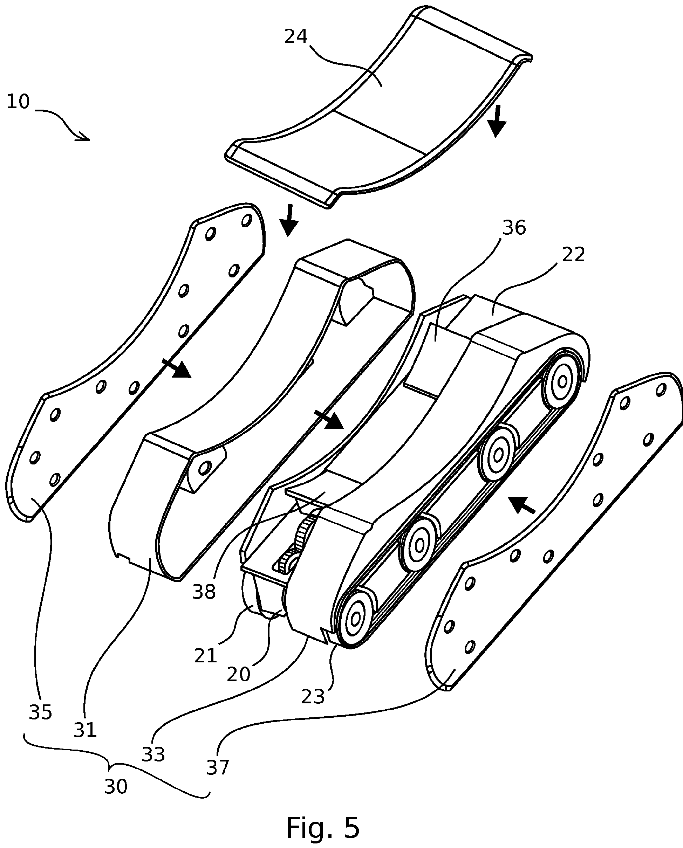

L'élément principal et sa coque en vue éclatée est représenté sur la figure 5. La coque du dispositif peut se composer de plusieurs parties. De façon avantageuse, la coque 30 comprend deux demi-coques 31 et 33 symétriques. Chacune des demi-coques est destinée à entourer de façon à englober la moitié du châssis 20 dans le sens longitudinal et deux moitiés des deux pièces de liaison 36 et 38 comme on peut le voir sur la figure 5 où la demi-coque 33 est mise en place autour du châssis. De préférence, lorsque les deux demi-coques sont mises en place autour du châssis, elles sont bord à bord au centre de l'élément.

La partie supérieure de la coque 30 a une forme en « cuvette », ou plus précisément courbe avec une forme partiellement circulaire de forme complémentaire au support de roue 24 et aux pièces de liaison. Les pièces de liaison 36 et 38 sont placées sur le circuit imprimé de façon à ce que leurs faces inclinées épousent la surface supérieure de la coque 30.

Les quatre poulies et les galets intermédiaires ainsi que les moyens roulants composés des deux chenilles 21 et 23 sont mis en place sur le châssis après les demi-coques. Cela permet d'éviter que des poussières et des salissures emmagasinées par les moyens roulants en contact avec le sol viennent polluer l'intérieur de l'élément principal et en particulier les composants mécaniques et électroniques.

La coque 30 comprend également deux caches 35 et 37 destinés à se plaquer contre les bords extérieurs des deux demi-coques. Lorsque les caches sont en place sur les demi-coques, seules les parties des chenilles 21 et 23 en contact avec le sol sont visibles.

Le support de poussette 24 de l'élément 10 est mis en place en dernier sur les demi-coques et contribue à protéger le dispositif et à maintenir les coques ensemble.

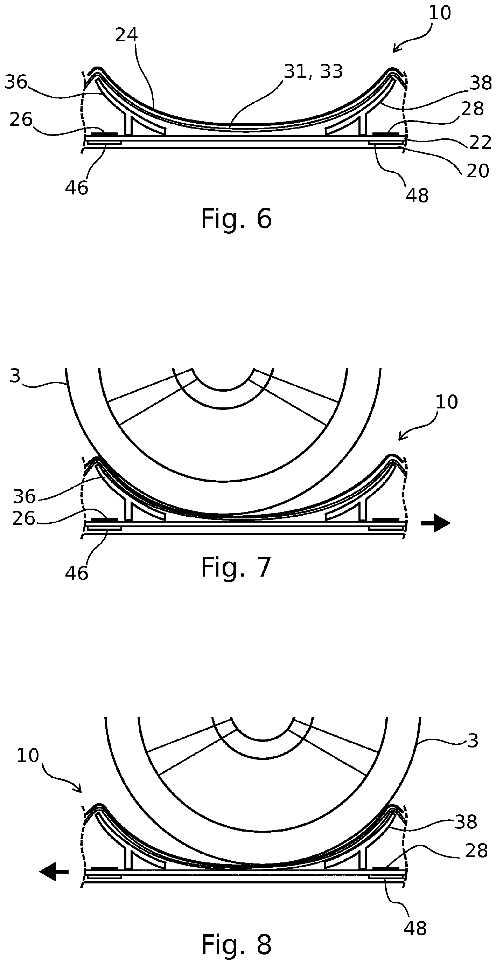

La figure 6 est une vue schématisée et partielle du dispositif selon l'invention selon une coupe longitudinale. Le circuit imprimé comporte au moins un capteur de pression. Selon un mode de réalisation préféré de l'invention, les capteurs de pression comprennent chacun au moins une jauge de contrainte 26 et 28 située sur le circuit imprimé 22. Les jauges de contrainte mesurent une déformation du support sur lequel elles sont collées, en l'occurrence dans l'invention elles mesurent la déformation du circuit imprimé 22. Le circuit imprimé est plaqué contre le châssis 20 qui comporte deux petites cavités 46 et 48. Les emplacements des cavités sont situés sur le châssis de façon à ce que la partie de circuit imprimé comprenant les jauges de contraintes soient sur les cavités. Les cavités présentent l'avantage d'augmenter la sensibilité de la mesure de la déformation.

Les pièces de liaison mécaniques 36 et 38 sont situées de façon à être positionnées entre le circuit imprimé et les coques 31 et 33 et sont en contact permanent avec le circuit imprimé.

Lorsqu'une force est appliquée sur le support de roue 24, elle est transmise par les pièces de liaison au circuit imprimé via les jauges de contrainte. Les pièces de liaison sont situées à deux emplacements distincts sur le circuit imprimé de façon à ce que chaque pièce de liaison relie mécaniquement une des deux parois latérales inclinées du support de roue 24 à un emplacement du circuit imprimé situé respectivement à proximité chacun d'une jauge de contrainte. La déformation du circuit imprimé induite par la force exercée sur le support et transmise par les pièces de liaison est mesurée par les jauges de contrainte.

Dans un mode de réalisation préférentiel, chaque capteur de pression comprend deux paires de jauges de contrainte placées sur chaque face du circuit imprimé et en vis à vis, et montées en demi-pont. Chaque paire étant située à proximité de l'emplacement respectivement d'une pièce de liaison. Cette disposition permet de s'affranchir de la déformation du circuit imprimé liée à la dilatation par la température. En effet, si une déformation due à la température se produit, elle est mesurée par les deux jauges de contrainte de part et d'autre du circuit imprimé et grâce a leur montage en demi-pont les effets de la déformation due à la température s'annulent.

La figure 7 représente de façon schématique l'élément 10 en déplacement de gauche à droite et sur lequel est posé une roue 3 de poussette. Sur la figure 8, l'élément 10 se déplace de droite à gauche. Le déplacement se fait soit selon un mouvement rectiligne uniforme, soit selon un mouvement rectiligne accéléré comme pour la phase de démarrage. Même si le frein de poussette bloque la roue en l'empêchant de tourner sur son axe, le mouvement de gauche à droite de l'élément 10 provoque le déplacement du poids de la poussette dans la direction opposée.

Lorsque le déplacement est de gauche à droite, la mesure de la force appliquée par la roue atteint un maximum à gauche et un minimum à droite, tandis que dans un déplacement de droite à gauche, la mesure de la force appliquée par la roue atteint un minimum à gauche et un maximum à droite. Le capteur de pression composé de la pièce de liaison 36 et de la jauge de contrainte 26 est davantage sollicité que le capteur de pression composé de la pièce de liaison 38 et de la jauge de contrainte 28 dans un déplacement de gauche à droite et inversement.

Ainsi, lorsque l'élément 10 se déplace dans une direction, la sollicitation du capteur de pression situé à l'opposé de la direction de déplacement atteint un maximum tandis que la sollicitation du capteur de pression situé le plus près de la direction de déplacement atteint son minimum.

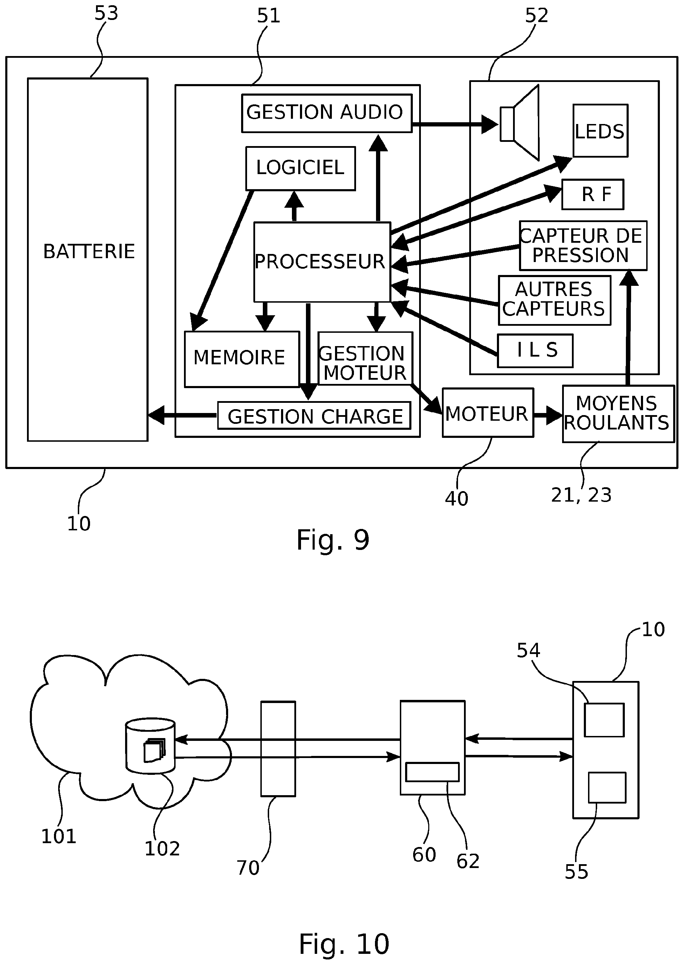

En référence à la figure 9, l'élément principal 10 comprend également un module de contrôle et de pilotage 51, un module de périphériques 52 et un module de chargement tel que la batterie 53. Le module de contrôle et de pilotage comprend le circuit imprimé muni d'un processeur, d'un programme de contrôle 55, d'une mémoire, des moyens pour gérer les périphériques et d'un moyen pour mesurer la consommation électrique en temps réel afin de gérer le rendement. Le module de périphériques 52 comprend un circuit émetteur/récepteur de signal radiofréquence (RF) donc capable d'échanger des données à distance avec un périphérique sans contact et au moins un capteur de pression apte à fournir au processeur de l'information relative au mouvement de translation de la poussette et à l'agitation de l'enfant. Le module de périphériques comprend d'autres périphériques et capteurs tel que des moyens de mesure du niveau de bruit, de la température et de l'hygrométrie ambiante, un dispositif audio, des LEDs et des moyens pour mettre l'élément principal en veille tel qu'un interrupteur à lames souples (ILS). Le capteur de pression permet au dispositif de détecter lorsque l'enfant est dans la poussette et lorsqu'il est retiré de la poussette.

L'interrupteur ILS change d'état lorsque les deux éléments 10 et 11 sont en contact, par exemple par l'intermédiaire d'une partie aimantée qui coopère ensemble. L'état de veille peut signifier que le dispositif est inactif mais peut autoriser le fonctionnement de l'émetteur/récepteur de signal RF en l'absence de l'enfant pour ne pas l'exposer aux ondes RF. Une seconde batterie qui fait office de batterie de secours peut être contenue dans l'élément secondaire. La seconde batterie recharge la première batterie 53 lorsque les deux éléments sont en contact aimanté. L'élément principal dispose d'un indicateur de charge pour signaler à l'utilisateur l'état de charge de la batterie. Cet indicateur peut être le moyen lumineux 27 tel qu'une LED de couleur. Une LED peut également indiquer le statut du dispositif, tel que « en fonctionnement », « en veille » et « en train d'échanger des données avec le terminal numérique » selon la couleur.

Le circuit émetteur/récepteur de signal sans contact RF de l'élément principal 10 est de préférence basé sur une communication de type Bluetooth. En référence à la figure 10, le module Bluetooth 54 de l'élément principal 10 est capable d'échanger des données avec un terminal numérique 60. Cet échange d'informations peut se faire dans les deux sens. Le terminal numérique 60 peut être un Smartphone, une tablette, un ordinateur et comprend un écran tactile. Le terminal numérique est connectable sans fil à une base de données 102 accessible sur le réseau internet 101 via un réseau de télécommunication et de géolocalisation ou autre. Une interface ou une application 62 installée sur le terminal numérique permet à l'utilisateur de contrôler l'état du dispositif et les données enregistrées pendant son utilisation. Les données de chaque dispositif peuvent être stockées dans la base de données 102 accessible par un moyen d'identification 70 de l'utilisateur. Sur l'interface 62, l'utilisateur retrouve également l'intégralité de ses données, programmes, paramétrages etc. Les données d'utilisation peuvent être visualisées par exemple sous forme de graphique d'utilisation en fonction du temps.

L'élément principal est muni d'un dispositif audio de façon à diffuser des sons, via un haut-parleur, tels que des berceuses ou des bruits de nature. Ces sons préalablement enregistrés dans la mémoire du dispositif de contrôle et de pilotage peuvent être choisis et enregistrés par l'utilisateur lui-même par l'intermédiaire de l'interface 62 du terminal numérique 60.

Le programme de contrôle 55 mémorisé dans la mémoire de l'élément principal ne peut s'exécuter que lorsque le dispositif n'est pas en veille de façon à empêcher tout démarrage du moteur lorsque le dispositif est en veille. Le programme de contrôle est donc exécuté en l'absence de communication avec le terminal numérique. Principalement, le programme de contrôle commande le démarrage et l'arrêt du moteur, la durée des plages de fonctionnement et leur fréquence selon une séquence par défaut prédéfinie à l'avance et enregistrée dans la mémoire de l'élément principal. La séquence par défaut consiste à démarrer le moteur, le faire tourner pendant une durée comprise entre 2 minutes et 4 minutes, par exemple égale à 3 minutes, arrêter le moteur et mettre le dispositif « sur écoute », c'est à dire prêt à redémarrer en cas de mouvements de la poussette ou de pleurs. Le programme de contrôle par défaut peut être mis à jour par l'intermédiaire du terminal numérique 60 mais il peut évoluer également de façon autonome au fur et à mesure des utilisations tel qu'un système expert.

Le programme de contrôle peut s'adapter grâce à des informations que lui fournit l'élément principal, et enregistrées pendant son utilisation. Les informations peuvent être celles mesurées grâce aux capteurs et moyens de mesure environnementaux tels que le bruit, l'agitation de l'enfant, la température, l'humidité, etc. Adapter le programme de contrôle signifie définir ou modifier certaines variables de son fonctionnement à partir des paramètres enregistrés par les capteurs au fur et à mesure de l'utilisation du dispositif et définir une séquence adaptée.

Par l'intermédiaire de l'interface 62 de son terminal numérique, l'utilisateur peut choisir si au démarrage du dispositif, le programme de contrôle exécutera la séquence par défaut ou la séquence adaptée. Bien entendu, par l'intermédiaire de l'interface 62 du terminal numérique 60, l'utilisateur lui-même peut faire varier certains paramètres du programme de contrôle comme la durée des plages de fonctionnement et leur fréquence dans la limite de la plage maximum définie à l'avance pour la sécurité de l'enfant et pour éviter son conditionnement.

La base de données 102 accessible sur Internet est alimentée par les possesseurs et utilisateurs du dispositif selon l'invention qui utilisent l'application sur leur terminal numérique. Les données récoltées sont exploitées de façon anonyme. Elles permettent d'établir des statistiques et servent à l'élaboration d'une plateforme collaborative.

La base de données peut servir également à élaborer une nouvelle version du programme de contrôle et le mettre en ligne à disposition des utilisateurs. En effet, à partir des données récoltées, on peut établir des corrélations entre les variables d'environnement et la nécessité de bercer un enfant. Le programme de contrôle de l'utilisateur peut donc également s'adapter à partir de données disponibles sur la plateforme collaborative. Cette capacité à pouvoir se connecter à un réseau d'informations confère au dispositif selon l'invention la qualité d'objet connecté.

La suite de la description décrit le fonctionnement du dispositif selon l'invention.

Lorsque des parents ont besoin de bercer leur enfant placé dans la poussette, ils placent les deux éléments 10 et 11 sur le sol de façon à ce que les moyens roulants soient posés sur le sol. Les roues sur lesquelles le frein de stationnement de la poussette a été appliqué sont de préférence placées sur le support de roue des deux éléments.

La mise en route du moteur est automatiquement déclenchée par l'utilisateur lors de la mise en mouvement par actionnement manuel de la poussette placée sur le dispositif selon l'invention. L'actionnement manuel consiste pour l'utilisateur à pousser et tirer la poussette selon un mouvement de va-et-vient comme s'il voulait produire un balancement de la poussette pour bercer manuellement son enfant.

Ainsi, l'utilisateur en poussant et tirant la poussette entraine les éléments mobiles dans un mouvement de va-et-vient et la poussette se déplace avec eux. Les capteurs de déformation sont sollicités de façon alternative en passant par un maximum puis un minimum comme décrit en référence aux figures 7 et 8, et ainsi le module de contrôle et de pilotage reconnaît un mouvement de va-et-vient. Le nombre d'aller et retour à partir duquel le module de contrôle et de pilotage met en route le moteur et exécute le programme de contrôle est au moins égal à un et peut être réglé pour être égal à deux ou trois. Par défaut, le démarrage du moteur est commandé lorsque chaque capteur de pression est sollicité une fois de façon alternative donc après un aller et retour. Le mouvement de va-et-vient de l'élément principal 10 entraîne le déplacement de la poussette qui entraine à son tour l'élément secondaire 11. Le moteur suit une courbe de vitesse de type sinusoïdal avec un palier lorsque le moteur atteint sa vitesse maximale. L'entraînement du moteur est de préférence configuré de telle sorte qu'à la fin du mouvement de translation dans une direction, c'est-à-dire avant que la direction du mouvement s'inverse, la vitesse a diminué progressivement.

L'arrêt du mouvement est automatique au bout d'une durée prédéfinie assez courte comprise entre 2 et 4 minutes. L'arrêt est progressif c'est à dire que la vitesse du mouvement de va-et-vient diminue progressivement avant de s'arrêter. Le dispositif détecte alors tout mouvement de la poussette ou des pleurs qui signifieraient que l'enfant s'agite encore et le balancement serait alors repris automatiquement. A tout moment, le dispositif peut être remis en route et le mouvement repris par un geste volontaire de l'utilisateur. Le dispositif peut ainsi se mettre en route plusieurs fois de façon consécutive pendant de courts laps de temps jusqu'à ce que l'enfant soit calme.

Le dispositif peut également être arrêté de façon volontaire par l'utilisateur. Pour cela, l'utilisateur retient la poussette, le cycle alternatif du poids sur les deux capteurs de pression est rompu, le module de contrôle et de pilotage envoie un signal d'arrêt au moteur. L'arrêt du dispositif est également commandé lorsque l'utilisateur retire la poussette du dispositif, ou lorsque l'enfant est retiré de la poussette qui repose sur le dispositif. Dans ces deux cas, les deux capteurs de pression détectent une variation importante du poids et le module de contrôle et de pilotage envoie un signal d'arrêt au moteur. Un signal sonore ou lumineux est émis lorsque l'enfant est retiré de la poussette.

A chaque utilisation du dispositif, des données sont enregistrées telles que le nombre de fois consécutives où le dispositif s'est mis en route, l'heure, le niveau de bruit ambiant, l'hygrométrie, la température. Les données sont stockées dans la mémoire de l'élément motorisé en attendant d'être envoyées au terminal numérique 60.

Aucune communication entre le terminal numérique 60 et l'élément motorisé 10 n'est possible et autorisé lorsque le dispositif est placé sous les roues de la poussette et en fonctionnement. En effet, dès que les deux éléments sont séparés l'un de l'autre, le module Bluetooth 54 est éteint, alors que, lorsque les deux éléments sont associés l'un à l'autre par contact aimanté, la communication est de nouveau possible. Cette interruption de la communication sans fil activée par l'interrupteur ILS, permet au dispositif de ne pas émettre d'ondes radio lorsqu'il est utilisé donc lorsqu'il est à proximité de l'enfant.

Le module de contrôle et de pilotage agit sur un certain nombre de paramètres du mouvement du dispositif selon l'invention. Ces paramètres sont principalement la longueur de course, la fréquence, l'accélération et la décélération et la durée du cycle de fonctionnement.

La distance de course est de préférence comprise entre 40 et 90 mm et de préférence égale à 50 mm. La période du mouvement de l'élément principal 10 peut avoir une plage de fréquence comprise entre 10 et 40 cycles par minute.

Le module de contrôle et de pilotage est configuré pour ajuster certains paramètres du dispositif pendant son fonctionnement. Ces paramètres ajustables sont la fréquence, l'accélération et la décélération du mouvement. L'ajustement se fait par rapport à des données mesurées pendant le fonctionnement qui sont fournies par les capteurs de pression et par les moyens de mesure de la consommation électrique afin d'optimiser celle-ci.

De plus, dès les premières données stockées, le programme de contrôle peut s'adapter selon le contenu des données. Par exemple, si le nombre de fois consécutives où le dispositif se met en mouvement est supérieur à 4, (l'enfant ne s'est pas calmé malgré les périodes de balancement consécutives), le programme de contrôle est modifié de façon à ce que lors de la prochaine utilisation, la durée du premier cycle de fonctionnement sera augmentée. Le programme de contrôle peut être adapté grâce à d'autres données comme par exemple l'heure de la journée, la température ambiante, etc. En outre, le programme de contrôle même adapté est toujours ajusté pour éviter le conditionnement de l'enfant. Par exemple, deux séquences de fonctionnement consécutives correspondant chacune à un endormissement de l'enfant ne seront pas identiques.

Le mouvement de va-et-vient du dispositif produit un effet de basculement de la poussette dû au poids de l'enfant et des amortisseurs de la poussette. La poussette et en particulier le hamac 8 où est placé l'enfant suit un mouvement de translation oscillant. Par conséquent, cet effet de basculement induit un mouvement oscillant libre de la poussette qui vient s'ajouter aux oscillations forcées induite par le mouvement de va-et-vient de l'élément principal 10.

Le dispositif comprend un moyen pour analyser la consommation de la batterie en temps réel pendant le mouvement et un moyen pour mesurer la variation de l'intensité du courant consommé par le moteur. Ce moyen peut être un compteur de coulomb. Le module de contrôle et de pilotage ajuste pendant le mouvement de l'élément principal 10, les paramètres du mouvement tels que la fréquence, l'accélération et la décélération afin que la variation de l'intensité du courant consommé par le moteur pendant le mouvement de translation en va-et-vient de l'élément principal 10 tende vers une sinusoïde parfaite. La consommation électrique du dispositif est ainsi optimisée pour faire durer la batterie le plus longtemps possible.

Le dispositif comprend un moyen pour que la distance parcourue par l'élément principal 10 soit identique à l'aller et au retour c'est à dire dans les deux directions de déplacement. Afin que cette condition soit toujours vérifiée, au moins un des pignons de l'engrenage 41 est équipé d'un aimant. Un capteur de type capteur à effet Hall donne un signal lorsqu'il détecte l'aimant donc à chaque tour du pignon portant l'aimant. Lorsque le nombre de passage de l'aimant devant le capteur atteint un certain nombre, le processeur commande au moteur de changer de sens. Le nombre de passage de l'aimant devant le capteur est identique dans les deux sens de rotation et correspond à la distance de course désirée.

Grâce à ce moyen, l'élément mobile parcourt une distance identique dans les deux directions de son mouvement de va-et-vient même si le moteur ne tourne pas exactement à la même vitesse dans les deux sens. Ainsi, une dérive éventuelle dans le déplacement du dispositif est annulée. De façon avantageuse, le dispositif motorisé est toujours ramené à son point de départ avant de stopper.

Selon une variante de réalisation de l'invention les moyens roulants sont deux roues motrices à l'avant et une ou deux roues à l'arrière. Dans ce cas les roues remplacent les chenilles et les deux roues motrices remplacent également les deux poulies d'entrainement.

Selon une seconde variante de réalisation du dispositif selon l'invention, les moyens roulants sont une paire de roue à l'avant et une paire de roues à l'arrière et une courroie centrale qui entraine l'axe commun d'une des paires de roues.

## Revendications

1. Dispositif de balancement de poussette (2) comprenant au moins un élément principal (10) muni d'un moteur (40) et de moyens roulants (21, 23) sur sa face inférieure, ledit moteur et lesdits moyens roulants étant adaptés pour entraîner ledit élément principal dans un mouvement de va et vient, la face supérieure dudit élément principal (10) étant adaptée pour recevoir une roue (3) ou (4) de la poussette,
**caractérisé en ce que** lesdits moyens roulants sont adaptés pour rouler sur le sol et **en ce que** le dispositif comprend un moyen pour démarrer automatiquement le mouvement de va-et-vient par un geste volontaire de l'utilisateur consistant à pousser la poussette (2) de façon à entraîner l'élément principal (10) au moins une fois dans une première direction et au moins une fois dans la direction inverse à la première.

2. Dispositif selon la revendication 1, dans lequel la face supérieure dudit élément principal (10) est un support de roue (24) de forme partiellement circulaire avec deux bords latéraux inclinés vers le centre, de façon à définir un moyen pour empêcher la roue (3) ou (4) de sortir du dispositif de balancement involontairement.

3. Dispositif selon l'une des revendications 1 ou 2, dans lequel lesdits moyens roulants (21, 23) sont deux chenilles, de type courroie fermée, la première chenille (21) est tendue par deux poulies (211, 214) situées aux extrémités et guidée par un ou deux galets intermédiaires (212, 213), la seconde chenille (23) est tendue par deux poulies (231, 234) situées aux extrémités et guidée par un ou deux galets intermédiaires (232, 233).

4. Dispositif selon la revendication 1, 2 ou 3, comprenant un élément secondaire (11) de forme extérieure identique à l'élément principal (10) et ayant sur sa face supérieure un support de roue (124) de forme partiellement circulaire avec deux parois latérales inclinées vers le centre, adapté pour recevoir une roue (3) ou (4) de la poussette (2).

5. Dispositif selon l'une des revendications 1 à 4, dans lequel l'élément principal (10) comprend un châssis (20) sur lequel est fixé un circuit imprimé (22) contenant un circuit électronique destiné à gérer la mise en route, le démarrage et l'arrêt du moteur (40) et le cycle de fonctionnement du dispositif de balancement.

6. Dispositif selon la revendication 2 ou selon l'une des revendications 3 à 5 lorsque dépendante de la revendication 2, dans lequel l'élément principal (10) comporte un moyen pour détecter la présence et les mouvements d'un poids situé sur son support de roue (24).

7. Dispositif selon la revendication 6, dans lequel le moyen de l'élément principal (10) pour détecter la présence et les mouvements d'un poids situé sur son support de roue (24) comprend deux capteurs de pression comportant chacun au moins une jauge de contrainte (26, 28).

8. Dispositif selon la revendication 7, dans lequel chaque capteur de pression comprend une pièce de liaison (36, 38) située sur le circuit imprimé (22) de façon à relier mécaniquement une paroi latérale inclinée du support (24) à un emplacement du circuit imprimé situé respectivement à proximité d'une jauge de contrainte (26, 28).

9. Dispositif selon la revendication 8, dans lequel chaque capteur de pression comprend deux paires de jauges de contrainte placées sur chaque face du circuit imprimé (22) en vis à vis, et montées en demi-pont, chaque paire étant située à proximité de l'emplacement respectivement d'une pièce de liaison (36, 38), de façon à s'affranchir de la déformation du circuit imprimé liée à la dilatation par la température.

10. Dispositif selon l'une des revendications 8 ou 9, dans lequel le châssis (20) comprend des cavités (46 et (48), les emplacements desdites cavités étant situés sur le châssis de façon à ce que la partie de circuit imprimé (22) comprenant les jauges de contraintes soient sur les cavités.

11. Dispositif selon la revendication 4 ou selon l'une des revendications 5 à 10 lorsque dépendante de la revendication 4, dans lequel ledit élément principal (10) comporte une partie aimantée destinée à coopérer avec une partie aimantée comprise dans l'élément secondaire (11) et maintenir ensemble les deux éléments (10 et 11) lorsqu'ils ne sont pas utilisés.

12. Dispositif selon l'une des revendications 1 à 11, dans lequel ledit élément principal (10) comprend un module de contrôle et de pilotage (51), un module de périphériques (52) et un module de chargement tel qu'une batterie (53), lesdits trois modules étant reliés entre eux.

13. Dispositif selon la revendication 12, dans lequel ledit module de contrôle et de pilotage (51) comprend le circuit imprimé (22) muni d'un processeur, d'un programme de contrôle (55), d'une mémoire et de moyens pour gérer le module de périphériques, ledit programme de contrôle (55) commandant le démarrage et l'arrêt du moteur, la durée des plages de fonctionnement et leur fréquence selon une séquence prédéfinie à l'avance et enregistrée dans ladite mémoire dudit élément principal (10).

14. Dispositif selon la revendication 12 ou 13, dans lequel ledit module de périphériques (52) comprend des moyens de mesure du niveau de bruit, de la température et de l'hygrométrie ambiantes, un dispositif audio, un moyen lumineux (27) tel qu'une LED un moyen pour mettre ledit élément principal (10) en veille et un moyen pour mesurer la variation de l'intensité du courant consommé par le moteur (40) .

15. Dispositif selon la revendication 14, dans lequel ledit dispositif pour mettre l'élément principal (10) en veille est un interrupteur à lames souples qui change d'état lorsque lesdits deux éléments (10) et (11) coopèrent par contact desdites parties aimantées.

16. Dispositif selon l'une des revendications 14 ou 15, dans lequel un signal sonore ou lumineux est émis lorsque l'enfant est retiré de la poussette.

17. Dispositif selon l'une des revendication 12 à 16, dans lequel ledit module de périphériques (52) comprend un circuit émetteur/récepteur de signaux radiofréquence (RF) tel qu'un module Bluetooth (54).

18. Dispositif selon la revendication 13 ou selon l'une des revendications 14 à 17 lorsque dépendante de la revendication 13, dans lequel ledit programme de contrôle (55) s'exécute automatiquement après que le dispositif a démarré par un geste volontaire de l'utilisateur, selon une séquence par défaut ou selon une séquence adaptée après plusieurs utilisations, aux différentes données enregistrées par lesdits capteurs, lesdites séquences étant enregistrées dans la mémoire dudit élément principal.

19. Dispositif selon la revendication 18, dans lequel le module de contrôle et de pilotage ajuste pendant le mouvement de l'élément principal (10) les paramètres du mouvement tels que la fréquence, l'accélération, la décélération afin que la variation de l'intensité du courant consommé par le moteur pendant le mouvement de translation en va-et-vient de l'élément principal (10) tende vers une sinusoïde parfaite.

20. Dispositif selon la revendication 17 ou selon l'une des revendications 18 et 19 lorsque dépendante de la revendication 17, dans lequel ledit module Bluetooth (54) de l'élément principal (10) est capable de communiquer et d'échanger des données avec un terminal numérique (60) de type Smartphone, l'échange de données n'étant autorisé et possible que lorsque lesdits deux éléments (10) et (11) sont en contact c'est à dire lorsque ledit dispositif est en veille.

21. Dispositif selon la revendication 20, dans lequel ledit terminal numérique mobile (60) est un Smartphone, une interface ou une application (62) installée sur le terminal numérique permettant à l'utilisateur de contrôler après l'utilisation dudit dispositif les données enregistrées pendant son utilisation.

22. Dispositif selon la revendication 21, dans lequel les données dudit dispositif sont stockées dans une base de données (102) accessible par un moyen d'identification (70) de l'utilisateur sur le réseau Internet (101), ladite base de données (102) accessible sur le réseau Internet (101) étant alimentée par les possesseurs et utilisateurs du dispositif selon l'invention qui utilisent l'interface (62) sur leur terminal numérique, ladite base de données étant exploitée de façon anonyme afin d'établir des statistiques et servant à l'élaboration d'une plateforme collaborative.

23. Dispositif selon la revendication 11 ou selon l'une des revendications 12 à 22 lorsque dépendante de la revendication 11 dans lequel ledit élément secondaire (11) contient une batterie de secours qui recharge ladite batterie (53) lorsque lesdits deux éléments (10) et (11) sont en contact aimanté.

24. Dispositif selon la revendication 4 ou selon l'une des revendications 5 à 23 lorsque dépendante de la revendication 4 dans lequel ledit élément principal (10) et ledit élément secondaire (11) comportent une coque (30) composée de deux demi-coques (31 et 33) et deux caches latéraux (35 et 37).

25. Dispositif selon l'une des revendications 1 à 24, dans lequel l'élément principal est équipé d'un moyen pour que la distance parcourue dans une direction soit identique à la distance parcourue dans la direction opposée lors d'un mouvement de va-et-vient.

## Patentansprüche

1. Vorrichtung zum Schaukeln eines Kinderwagens (2) umfassend wenigstens ein Hauptelement (10), das mit einem Motor (40) und mit Rollmitteln (21, 23) auf seiner Unterseite versehen ist, wobei der Motor und die Rollmittel geeignet sind, das Hauptelement in eine Hin-und-Herbewegung zu versetzen, wobei die Oberseite des Hauptelements (10) geeignet ist, ein Rad (3) oder (4) des Kinderwagens aufzunehmen,
**dadurch gekennzeichnet, dass** die Rollmittel geeignet sind, auf dem Boden zu rollen, und dadurch, dass die Vorrichtung ein Mittel zum automatischen Starten der Hin-und-Herbewegung durch eine bewusste Geste des Benutzers umfasst, die darin besteht, den Kinderwagen (2) so zu schieben, dass das Hauptelement (10) wenigstens einmal in einer ersten Richtung und wenigstens einmal in der Richtung, die der ersten Richtung entgegengesetzt ist, angetrieben wird.

2. Vorrichtung nach Anspruch 1, wobei die Oberseite des Hauptelements (10) ein teilweise kreisförmiger Radträger (24) mit zwei Seitenrändern ist, die zum Mittelpunkt hin geneigt sind, so dass sie ein Mittel zur Verhinderung des ungewollten Austretens des Rads (3) oder (4) aus der Schaukelvorrichtung definieren.

3. Vorrichtung nach einem der Ansprüche 1 oder 2, wobei die Rollmittel (21, 23) zwei Raupen vom Typ eines geschlossenen Riemens sind, die erste Raupe (21) von zwei Scheiben (211, 214) gespannt ist, die sich an den Enden befinden, und von einer oder zwei Zwischenrollen (212, 213) geführt ist, die zweite Raupe (23) von zwei Scheiben (231, 234) gespannt ist, die sich an den Enden befinden, und von einer oder zwei Zwischenrollen (232, 233) geführt ist.

4. Vorrichtung nach Anspruch 1, 2 oder 3, umfassend ein Nebenelement (11) mit einer zum Hauptelement (10) identischen Außenform und mit einem teilweise kreisförmigen Radträger (124) mit zwei Seitenrändern auf seiner Oberseite, die zum Mittelpunkt hin geneigt sind, das geeignet ist, ein Rad (3) oder (4) des Kinderwagens (2) aufzunehmen.

5. Vorrichtung nach einem der Ansprüche 1 bis 4, wobei das Hauptelement (10) einen Grundträger (20) umfasst, auf dem eine Platine (22) befestigt ist, die eine elektronische Schaltung enthält, die dazu bestimmt ist, das Einschalten, den Start und den Stopp des Motors (40) und den Betriebszyklus der Schaukelvorrichtung zu verwalten.

6. Vorrichtung nach Anspruch 2 oder einem der Ansprüche 3 bis 5, wenn von Anspruch 2 abhängig, wobei das Hauptelement (10) ein Mittel zur Detektion des Vorhandenseins und der Bewegungen eines Gewichts aufweist, das sich auf seinem Radträger (24) befindet.

7. Vorrichtung nach Anspruch 6, wobei das Mittel des Hauptelements (10) zur Detektion des Vorhandenseins und der Bewegungen eines Gewichts, das sich auf seinem Radträger (24) befindet, zwei Drucksensoren umfasst, die jeweils wenigstens einen Dehnungsmessstreifen (26, 28) aufweisen.

8. Vorrichtung nach Anspruch 7, wobei jeder Drucksensor ein Verbindungsstück (36, 38) umfasst, das sich auf der Platine (22) befindet, um eine geneigte Seitenwand des Trägers (24) mechanisch mit einer Stelle der Platine zu verbinden, die sich jeweils in der Nähe eines Dehnungsmessstreifens (26, 28) befindet.

9. Vorrichtung nach Anspruch 8, wobei jeder Drucksensor zwei Paare von Dehnungsmessstreifen umfasst, die auf jeder Seite der Platine (22) gegenüberliegend platziert und halbbrückenartig angebracht sind, wobei sich jedes Paar in der Nähe der Nähe der jeweiligen Stelle eines Verbindungsstücks (36, 38) befindet, um sich von der Verformung der Platine in Verbindung mit der Ausdehnung durch die Temperatur zu befreien.

10. Vorrichtung nach einem der Ansprüche 8 oder 9, wobei der Grundträger (20) Hohlräume (46) und (48) umfasst und sich die Stellen der Hohlräume auf dem Grundträger befinden, so dass sich der Abschnitt der Platine (22), der die Dehnungsmessstreifen umfasst, auf den Hohlräumen befindet.

11. Vorrichtung nach Anspruch 4 oder einem der Ansprüche 5 bis 10, wenn von Anspruch 4 abhängig, wobei das Hauptelement (10) einen magnetischen Abschnitt aufweist, der dazu bestimmt ist, mit einem magnetischen Abschnitt zusammenzuwirken, der im Nebenelement (11) enthalten ist, und die zwei Elemente (10 und 11) zusammenzuhalten, wenn sie nicht in Gebrauch sind.

12. Vorrichtung nach einem der Ansprüche 1 bis 11, wobei das Hauptelement (10) ein Steuer- und Regelungsmodul (51), ein Peripheriegerätemodul (52) und ein Modul zum Laden wie etwa einer Batterie (53) umfasst, wobei die drei Module miteinander verbunden sind.

13. Vorrichtung nach Anspruch 12, wobei das Steuer- und Regelungsmodul (51) die Platine (22) umfasst, die mit einem Prozessor, einem Steuerungsprogramm (55), einem Speicher und Mitteln zur Verwaltung des Peripheriegerätemoduls versehen ist, wobei das Steuerungsprogramm (55) den Start und den Stopp des Motors, die Dauer der Betriebsbereiche und deren Häufigkeit entsprechend einer im Voraus vorgegebenen und im Speicher des Hauptelements (10) abgespeicherten Häufigkeit steuert.

14. Vorrichtung nach Anspruch 12 oder 13, wobei das Peripheriegerätemodul (52) Mittel zur Messung des Geräuschpegels, der Temperatur und der Luftfeuchtigkeit der Umgebung, eine Audiovorrichtung, ein Leuchtmittel (27) wie etwa eine LED, ein Mittel zum Versetzen des Hauptelements (10) in einen Bereitschaftsmodus und ein Mittel zur Messung der Variation der Stärke des Stroms, der vom Motor (40) verbraucht wird, umfasst.

15. Vorrichtung nach Anspruch 14, wobei die Vorrichtung zum Versetzen des Hauptelements (10) in einen Bereitschaftsmodus ein Reed-Schalter ist, der seinen Zustand ändert, wenn die zwei Elemente (10) und (11) durch Kontakt der magnetischen Abschnitte zusammenwirken.

16. Vorrichtung nach einem der Ansprüche 14 oder 15, wobei ein Ton- oder Leuchtsignal abgegeben wird, wenn das Kind aus dem Kinderwagen genommen wird.

17. Vorrichtung nach einem der Ansprüche 12 bis 16, wobei das Peripheriegerätemodul (52) eine Sende/Empfangsschaltung für Radiofrequenz- (RF) Signale wie etwa ein Bluetooth-Modul (54) umfasst.

18. Vorrichtung nach Anspruch 13 oder einem der Ansprüche 14 bis 17, wenn von Anspruch 13 abhängig, wobei das Steuerungsprogramm (55), nachdem die Vorrichtung durch eine bewusste Geste des Benutzers gestartet wurde, entsprechend einer Standardsequenz oder einer Sequenz, die nach mehreren Nutzungen an die verschiedenen Daten angepasst ist, die von den Sensoren abgespeichert werden, automatisch ausgeführt wird, wobei die Sequenzen im Speicher des Hauptelements gespeichert sind.

19. Vorrichtung nach Anspruch 18, wobei das Steuer- und Regelungsmodul während der Bewegung des Hauptelements (10) die Parameter der Bewegung, wie etwa die Häufigkeit, Beschleunigung, Verlangsamung justiert, damit die Variation der Stärke des Stroms, der vom Motor während der Hin-und-Her-Translationsbewegung des Hauptelements (10) verbraucht wird, zu einer perfekten Sinuskurve tendiert.

20. Vorrichtung nach Anspruch 17 oder einem der Ansprüche 18 und 19, wenn von Anspruch 17 abhängig, wobei das Bluetooth-Modul (54) des Hauptelements (10) geeignet ist, mit einem digitalen Endgerät (60) vom Typ Smartphone zu kommunizieren und Daten auszutauschen, wobei der Datenaustausch nur dann erlaubt und möglich ist, wenn die zwei Elemente (10) und (11) in Kontakt stehen, das heißt, wenn sich die Vorrichtung im Bereitschaftsmodus befindet.

21. Vorrichtung nach Anspruch 20, wobei das mobile digitale Endgerät (60) ein Smartphone ist, wobei eine Schnittstelle oder eine Anwendung (62), die auf dem digitalen Endgerät installiert ist, es dem Benutzer ermöglicht, nach Gebrauch der Vorrichtung die Daten zu kontrollieren, die während ihres Gebrauchs abgespeichert wurden.

22. Vorrichtung nach Anspruch 21, wobei die Daten der Vorrichtung in einer Datenbank (102) gespeichert sind, die über ein Mittel zur Identifikation (70) des Benutzers über das Internet-Netzwerk (101) zugreifbar ist, wobei die Datenbank (102), die über das Internet-Netzwerk (101) zugreifbar ist, von den Besitzern und Benutzern der erfindungsgemäßen Vorrichtung gespeist wird, die die Schnittstelle (62) auf ihrem digitalen Endgerät nutzen, wobei die Datenbank anonym betrieben wird, um Statistiken zu erstellen, und dem Aufbau einer kollaborativen Plattform dient.

23. Vorrichtung nach Anspruch 11 oder einem der Ansprüche 12 bis 22, wenn von Anspruch 11 abhängig, wobei das Nebenelement (11) eine Reservebatterie enthält, die die Batterie (53) wieder auflädt, wenn die zwei Elemente (10) und (11) in Magnetkontakt stehen.

24. Vorrichtung nach Anspruch 4 oder einem der Ansprüche 5 bis 23, wenn von Anspruch 4 abhängig, wobei das Hauptelement (10) und das Nebenelement (11) eine Schale (30) aufweisen, die aus zwei Halbschalen (31 und 33) und zwei Seitenabdeckungen (35 und 37) zusammengesetzt ist.

25. Vorrichtung nach einem der Ansprüche 1 bis 24, wobei das Hauptelement mit einem Mittel ausgestattet ist, damit bei einer Hin-und-Herbewegung die in einer Richtung zurückgelegte Strecke mit der in der entgegengesetzten Richtung zurückgelegten Strecke identisch ist.

## Claims

1. A rocking device for a stroller (2), comprising at least one main element (10) provided with a motor (40) and rolling means (21, 23) on its lower face, said motor and said rolling means being designed to drive said main element in a back and forth movement, the upper face of said main element (10) being designed to receive a wheel (3) or (4) of the stroller,
**characterized in that** said rolling means are designed to roll on the ground and the device comprises a means for automatically starting the back and forth movement as a result of a deliberate action on the part of the user, consisting in pushing the stroller (2) so as to drive the main element (10) at least once in a first direction and at least once in the direction opposite to the first direction.

2. The device according to claim 1, wherein the upper face of said main element (10) is a wheel support (24) of partially circular shape with two side edges inclined towards the center, so as to define a means for preventing the wheel (3) or (4) from unintentionally exiting the rocking device.

3. The device according to any one of claims 1 or 2, wherein said rolling means (21, 23) are two tracks, of closed belt type, the first track (21) is tensioned by two pulleys (211, 214) located at the ends and guided by one or two intermediate rollers (212, 213), the second track (23) is tensioned by two pulleys (231, 234) located at the ends and guided by one or two intermediate rollers (232, 233).

4. The device according to claim 1, 2 or 3, comprising a secondary element (11) of external shape identical to the main element (10) and having on its upper face a wheel support (124) of partially circular shape with two side walls inclined towards the center, designed to receive a wheel (3) or (4) of the stroller (2).

5. The device according to any one of claims 1 to 4, wherein the main element (10) comprises a frame (20) on which is secured a printed circuit (22) containing an electronic circuit intended to manage the switching on, the startup. and the stopping of the motor (40) and the operating cycle of the rocking device.

6. The device according to claim 2 or according to any one of claims 3 to 5 when depending on claim 2, wherein the main element (10) comprises a means for detecting the presence and movements of a weight located on its wheel support (24).

7. The device according to claim 6, wherein the means of the main element (10) for detecting the presence and movements of a weight located on its wheel support (24) comprises two pressure sensors each including at least one strain gauge (26, 28).

8. The device according to claim 7, wherein each pressure sensor comprises a connecting piece (36, 38) located on the printed circuit (22) so as to mechanically connect an inclined side wall of the support (24) to a location on the printed circuit located near a strain gauge (26, 28) respectively.

9. The device according to claim 8, wherein each pressure sensor comprises two pairs of strain gauges placed on each face of the printed circuit (22) facing each other, and mounted in a half-bridge, each pair being located close to the location of a connecting piece (36, 38) respectively, so as to overcome the deformation of the printed circuit caused by thermal expansion.

10. The device according to any one of claims 8 or 9, wherein the frame (20) comprises cavities (46) and (48), said cavities being located on the frame so that the printed circuit portion (22) comprising the strain gauges lies on the cavities.

11. The device according to claim 4 or according to any one of claims 5 to 10 when depending on claim 4, wherein said main element (10) includes a magnetized part intended to cooperate with a magnetized part comprised in the secondary element (11) and to hold the two elements (10 and 11) together when they are not used.

12. The device according to any one of claims 1 to 11, wherein said main element (10) comprises a control and piloting module (51), a peripheral module (52) and a charging module such as a battery (53), said three modules being interconnected.

13. The device according to claim 12, wherein said control and piloting module (51) comprises the printed circuit (22) provided with a processor, a control program (55), a memory and means for managing the peripheral module, said control program (55) controlling the starting and stopping of the motor, the duration of the operating ranges and their frequency according to a predefined sequence stored in said memory of said main element (10).

14. The device according to claim 12 or 13, wherein said peripheral module (52) comprises means for measuring ambient noise level, temperature and humidity, an audio device, a light means (27) such as a LED, a means for putting said main element (10) in standby and a means for measuring the variation in the current drawn by the motor (40).

15. The device according to claim 14, wherein said device for putting the main element (10) on standby is a reed switch whose state changes when said two elements (10) and (11) cooperate through the contact of said magnetized parts.

16. The device according to any one of claims 14 or 15, wherein an audible signal or a light signal is emitted when the child is removed from the stroller.

17. The device according to any one of claims 12 to 16, wherein said peripheral module (52) comprises a radiofrequency (RF) signal transceiver circuit such as a Bluetooth module (54).

18. The device according to claim 13 or according to any one of claims 14 to 17 when depending on claim 13, wherein said control program (55) is run automatically after the device has started with a deliberate gesture by the user, according to a default sequence or according to a sequence which, after several uses, is adapted to the different pieces of data recorded by said sensors, said sequences being recorded in the memory of said main element.

19. The device according to claim 18, wherein, during the movement of the main element (10), the control and piloting module adjusts the parameters of the movement such as the frequency, the acceleration, the deceleration so that the variation of the current drawn by the motor during the back and forth translational movement of the main element (10) tends towards a perfect sinusoid.

20. The device according to claim 17 or according to any one of claims 18 and 19 when depending on claim 17, wherein said Bluetooth module (54) of the main element (10) is capable of communicating and exchanging data with a digital terminal (60) of the smartphone type, the exchange of data being authorized and possible only when said two elements (10) and (11) are in contact, that is to say when said device is on standby.

21. The device according to claim 20, wherein said mobile digital terminal (60) is a smartphone, an interface or an application (62) installed on the digital terminal allowing the user, after the use of said device, to control the data recorded during its use.

22. The device according to claim 21, wherein the data of said device is stored in a database (102) accessible by a means of identification (70) of the user on the Internet network (101), said database (102), accessible on the Internet network (101), being fed by the owners and users of the device according to the invention who use the interface (62) on their digital terminal, said database being used anonymously in order to establish statistics and used for the development of a collaborative platform.

23. The device according to claim 11 or according to any one of claims 12 to 22 when depending on claim 11, wherein said secondary element (11) contains a backup battery which charges said battery 53 when said two elements (10) and (11) are in magnetized contact.

24. The device according to claim 4 or according to any one of claims 5 to 23 when depending on claim 4, wherein said main element (10) and said secondary element (11) include a shell (30) composed of two half-shells (31 and 33) and two side covers (35 and 37).

25. The device according to any one of claims 1 to 24, wherein the main element is provided with a means for ensuring that the distance traveled in one direction is the same as the distance traveled in the opposite direction in a back and forth movement.
